Europäisches Patentamt

European Patent Office

Office européen des brevets

(19)

(11) **EP 1 341 381 A1**

(12) **EUROPEAN PATENT APPLICATION**
published in accordance with Art. 158(3) EPC

(43) Date of publication:
03.09.2003 Bulletin 2003/36

(51) Int Cl.⁷: **H04N 5/92**

(21) Application number: 01982851.6

(86) International application number:
**PCT/JP01/10102**

(22) Date of filing: 19.11.2001

(87) International publication number:
**WO 02/043384 (30.05.2002 Gazette 2002/22)**

(84) Designated Contracting States:
**AT BE CH CY DE DK ES FI FR GB GR IE IT LI LU MC NL PT SE TR**

(30) Priority: 24.11.2000 JP 2000358209

(71) Applicant: **Sony Corporation**
**Tokyo 141-0001 (JP)**

(72) Inventor: **UEDA, Yasuo,**
**c/o SONY CORPORATION**
**Shinagawa-ku, Tokyo 141-0001 (JP)**

(74) Representative: **Mills, Julia**
**D Young & Co,**
**21 New Fetter Lane**
**London EC4A 1DA (GB)**

(54) **IMAGE RECORDING DEVICE AND IMAGE REPRODUCING DEVICE**

(57) A video tape recorder (1) combined with camera according to the present invention comprises a camera image pickup section (11), a still image processing unit (12), a DV data processing section (13), and a read/write section (14). The video tape recorder (1) combined with camera has capabilities of not only picking up and recording moving images, but also working as a digital still camera. In the case of still image pickup, the still image processing unit (12) converts a captured still image to 64 recording still images. In each recording still image, all values for (8×8) pixels constituting each DCT block correspond to a value for a given pixel in the captured still image. Consequently, the recording still image contains a DCT block only comprising DC components.

**FIG.1**

EP 1 341 381 A1

**Description**

Technical Field

The present invention relates to an image recording apparatus, an image reproducing apparatus, and an image recording-reproducing apparatus as well as an image recording method, an image reproducing method, and an image recording-reproducing method for recording and/or reproducing image data compressed by discrete cosine transform operation on a recording medium.

Background Art

Conventionally, there is known the nonreversible compression system using the discrete cosine transform (DCT) as an image compression system.

The nonreversible compression using the DCT first divides constituent pixels of an original image into operation units (DCT blocks) each comprising the specified number of pixels, and then performs a two-dimensional DCT operation in units of DCT blocks. Performing a DCT operation orthogonally transforms 2D data in the spatial domain into 2D data in the frequency domain. Since the information in a DCT block has image characteristics of close correlation between adjacent information, the energy concentrates on low-frequency components. Out of data in the DCT-calculated frequency domain, most information is contained in low-frequency components including DC components. High-frequency components contain almost no information. Accordingly, the nonreversible compression using the DCT quantizes data in the DCT-calculated frequency domain by assigning many bits to low-frequency components and a few (or no) bits to high-frequency components. The nonreversible compression using the DCT can efficiently compress image data by performing the DCT operation and quantization.

In recent years, there is proposed a digital video camera capable of capturing still images. The digital video camera of this kind compresses to store a picked-up still image data on a recording medium. The picked-up still image data may be compressed in the same compression circuit that is used for moving image data to perform DCT operation and quantization. The compressed images may be recorded on such recording media for storing moving image data as magnetic tape, disc media, etc.

Such digital video camera capable of capturing still images may be provided with semiconductor memory such as a memory card etc. for saving still images in addition to a recording medium for saving moving images. A digital video camera comprising a memory card for saving still images uses recording media differently. For example, moving image data is recorded on magnetic tape etc. having a large recording capacity. Still images are recorded on the memory card. When such video camera saves a still image, e.g., on the order of megapixels (millions of pixels), however, the memory card can save just several frames of still images. Even if the digital video camera comprises a memory card for saving still images, a captured still image may be once compressed in the same compression circuit that is used for moving image data to perform DCT operation and quantization. The compressed still image may be recorded on magnetic tape for saving moving images. The still image may be reproduced from the magnetic tape as needed, and then written back to the memory card.

When image data is compressed by performing the DCT operation and quantization, however, high-frequency components are removed as mentioned above. Compared to an original image, the compressed image produces high-pass distortion such as a so-called mosquito noise or block noise, deteriorating the image quality. The high-pass distortion hardly causes problems in the case of moving images owing to human visual characteristics. However, a visual problem may arise when the still image is displayed on a monitor or is printed out.

Consequently, an application such as the above-mentioned digital video camera capable of capturing still images has not been able to reproduce high-quality still images when the captured still image data is compressed in the same compression circuit used for moving image data to perform DCT operation and quantization.

Disclosure of the Invention

It is an object of the present invention to provide an image recording apparatus and a method thereof, an image reproducing apparatus and a method thereof, and an image recording-reproducing apparatus and a method thereof capable of reproducing high-quality still images despite the nonreversible compression using the orthogonal transform operation.

An image recording apparatus according to the present invention comprises: conversion means for converting one original still image to a plurality of recording still images according to a specified conversion system; compression means for compressing image data by using an orthogonal transform operation; and recording means for recording image data compressed by the compression means on a recording medium, wherein the conversion means uses only one given pixel in an original still image to constitute an orthogonal transform operation block in a recording still image, and generates a plurality of recording still images from an original still image according to a conversion system which allows all pixels constituting the original still image to be included in any orthogonal transform operation block in the recording still image; and the compression means compresses a plurality of recording still images generated by the conversion means.

An image reproducing apparatus according to the present invention comprises: reproduction means for reproducing compressed image data from a recording medium; expansion means for expanding a compressed image data reproduced by the reproduction means by using an inverse orthogonal transform operation; and conversion means for converting a plurality of recording still images to one original still image according to a specified conversion system, wherein the expansion means expands a plurality of recording still images reproduced from a recording medium; and the conversion means uses only one given pixel in an original still image to constitute an orthogonal transform operation block in a recording still image, and generates one original still image from a plurality of recording still images expanded by the expansion means according to a conversion system which allows all pixels constituting the original still image to be included in any orthogonal transform operation block in the recording still image.

An image recording-reproducing apparatus according to the present invention comprises: recording-reproducing means for recording and reproducing compressed image data on a recording medium; image compression-expansion means for compressing and expanding image data by using an orthogonal transform operation and an inverse orthogonal transform operation; and conversion means for converting one original still image to a plurality of recording still images according to a specified conversion system and converting a plurality of recording images to one original still image according to the specified conversion system, wherein when a still image is recorded, the conversion means uses only one given pixel in an original still image to constitute an orthogonal transform operation block in a recording still image, and generates a plurality of recording still images from an original still image according to a conversion system which allows all pixels constituting the original still image to be included in any orthogonal transform operation block in the recording still image; the image compression-expansion means compresses a plurality of recording still images generated by the conversion means; the recording-reproducing means records a plurality of recording still images compressed by the compression means on a recording medium; and when a still image is reproduced, the recording-reproducing means reproduces a plurality of compressed recording still images from a recording medium; the image compression-expansion means expands a plurality of compressed recording still images reproduced by the recording-reproducing means; and the conversion means generates an original still image from a plurality of recording still images expanded by the image compression-expansion means according to the specified conversion system.

An image recording method according to the present invention comprises: using only one given pixel in an original still image to constitute an orthogonal transform operation block in a recording still image, and generating a plurality of recording still images from the single original still image according to a conversion system which allows all pixels constituting the original still image to be included in any orthogonal transform operation block in the recording still image; compressing the plurality of recording still images by using an orthogonal transform operation in units of the orthogonal transform operation blocks; and recording the plurality of compressed recording still images on a recording medium.

An image reproducing method according to the present invention comprises: reproducing a plurality of recording still images from a recording medium; expanding a plurality of reproduced image-recording still images by using an inverse orthogonal transform operation in units of orthogonal transform operation blocks; using only one given pixel in an original still image to constitute an orthogonal transform operation block in a recording still image, and generating one original still image from the plurality of expanded recording still images according to a conversion system which allows all pixels constituting the original still image to be included in any orthogonal transform operation block in the recording still image; and outputting one generated original still image.

An image recording-reproducing method according to the present invention comprises: during recording, inputting one original still image; using only one given pixel in an original still image to constitute an orthogonal transform operation block in a recording still image, and generating a plurality of recording still images from the single original still image according to a conversion system which allows all pixels constituting the original still image to be included in any orthogonal transform operation block in the recording still image; compressing the plurality of recording still images by using an orthogonal transform operation in units of the orthogonal transform operation blocks; recording the plurality of compressed recording still images on a recording medium; and during reproduction, reproducing a plurality of recording still images from a recording medium; expanding a plurality of reproduced image-recording still images by using an inverse orthogonal transform operation in units of orthogonal transform operation blocks; using only one given pixel in an original still image to constitute an orthogonal transform operation block in a recording still image, and generating one original still image from the plurality of expanded recording still images according to a conversion system which allows all pixels constituting the original still image to be included in any orthogonal transform operation block in the recording still image; and outputting one generated original still image.

Brief Description of the Drawings

FIG. 1 shows a configuration of a video tape recorder combined with camera according to an embodiment of the present invention;
FIG. 2 shows a block configuration of a DV data processing section in the above-mentioned video tape recorder;
FIG. 3 shows the relationship between an original still image and a recording still image;
FIG. 4 illustrates a pixel configuration of the original still image;
FIG. 5 shows a DCT block configuration of a recording still image;
FIG. 6 illustrates how to divide an original still image into recording still images; and
FIG. 7 illustrates how to divide a megapixel still image.

Best Mode for Carrying Out the Invention

As an embodiment of the present invention, the foil owing describes a video tape recorder combined with camera to which the present invention is applied.

The video tape recorder according to the embodiment of the present invention is compliant with a so-called DV system (IEC 61834). The apparatus uses magnetic tape to record a moving image picked up by the camera and reproduces the moving image from the magnetic tape. The video tape recorder not only records moving images, but also works as a digital still camera for picking up still images. The video tape recorder operates in two operation modes, i.e., hereafter referred to as video mode and still mode. The video tape recorder records and reproduces a moving image in the video mode, and a still image in the still mode.

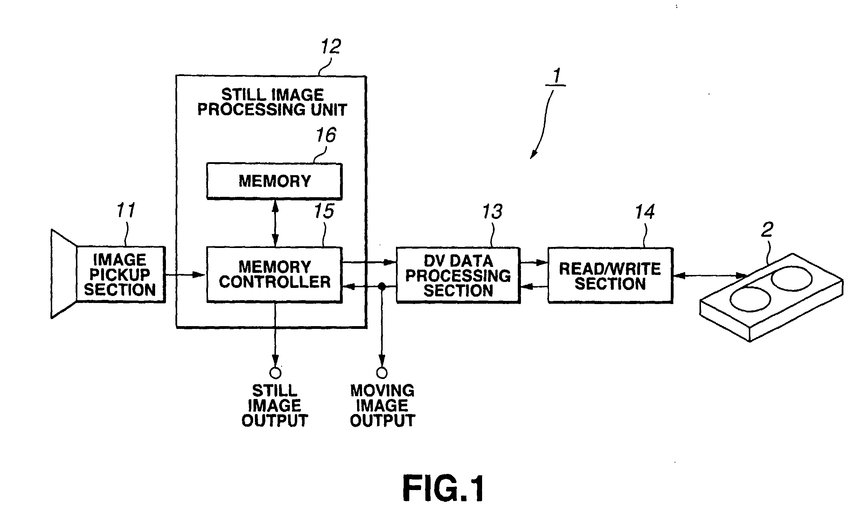

FIG. 1 shows a configuration of the video tape recorder according to the embodiment of the present invention.

As shown in FIG. 1, a video tape recorder 1 comprises an image pickup section 11, a still image processing unit 12, a DV data processing section 13, and a read/write section 14. The video tape recorder 1 uses magnetic tape 2 to record or reproduce a picked-up moving or still image.

The image pickup section 11 comprises an optical system such as a lens, a CCD, and an electric system such as a signal processing circuit. In the video mode, the image pickup section 11 picks up an object as a moving image, generates video data, and sends the video data to the still image processing unit 12. In the still mode, the image pickup section 11 picks up an object as a still image, generates one frame of still image data, and sends the still image data to the still image processing unit 12.

The still image processing unit 12 comprises a memory controller 15 and memory 16. In the video mode, the still image processing unit 12 sends input video data as is to the DV data processing section 13. In the still mode, the still image processing unit 12 converts images. Namely, it converts still image data for one frame to recording still image data comprising a plurality of frames, and vice versa. To perform the image conversion, the memory controller 15 expands the input image data on the memory 16 and reads the expanded data according to the specified sequence. When recording a still image, the still image processing unit 12 converts one frame of still image data input from the image pickup section 11 to recording still image data comprising a plurality of frames, and then sends the converted recording still image data to the DV data processing section 13. When reproducing a still image, the still image processing unit 12 converts the still image data comprising a plurality of frames input from the DV data processing section 13 to one frame of still image data, and then externally sends one frame of converted still image data. For example, one frame of externally output still image data is sent to a personal computer, printed on a printer, or recorded on a recording medium such as a memory card. The image conversion by the still image processing unit 12 will be described in more detail later.

During recording, the DV data processing section 13 is supplied with video data output from the image pickup section 11 and recording still image data converted in the still image processing unit 12. Also during recording, the DV data processing section 13 performs DCT operation and quantization for the image data to compress images. Further, the DV data processing section 13 converts the image data to a data format compliant with the DV system and sends the image data to the read/write section 14. During reproduction, the DV data processing section 13 is supplied with DV data from the read/write section 14. The DV data is read from the magnetic tape 2. During reproduction, the DV data processing section 13 performs inverse DCT operation and inverse quantization for the DV data to expand images. Further, the DV data processing section 13 converts the data format to the normal video data or recording still image data. The converted video data is externally transmitted as a moving image output. The converted recording still image data is transmitted to the still image processing unit 12.

The read/write section 14 controls the magnetic head changeover, rotary drum revolutions, magnetic tape speed, etc. to write and read DV data onto the magnetic tape 2.

The DV data processing section 13 will now be described.

The DV data processing section 13 compresses and expands image data, and converts the DV data format. For compressing and expanding image data, the DV data processing section 13 performs the DCT/IDCT operation and quantization or inverse quantization.

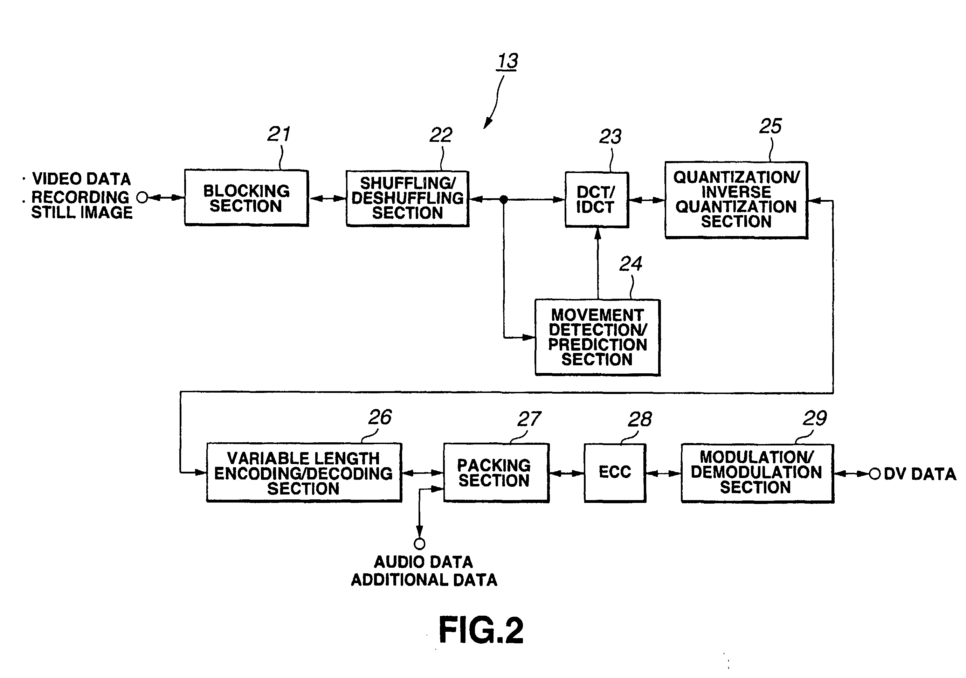

FIG. 2 shows a block configuration of the DV data processing section 13.

As shown in FIG. 2, the DV data processing section 13 comprises a blocking section 21, a shuffling/deshuffling section 22, a discrete cosine transform/inverse discrete cosine transform (DCT/IDCT) section 23, a movement detection section 24, a quantization/inverse quantization section 25, a variable length encoding/decoding section 26, a packing section 27, an ECC (Error Checking and Correcting) section 28, and a modulation/demodulation section 29.

First, the following describes processing of the DV data processing section 13 during recording.

The image pickup section 11 supplies video data and recording still image data. Both data are hereafter simply referred to as image data. The image data is sent to the blocking section 21.

The blocking section 21 performs a blocking process for the image data. The blocking process divides the image data into DCT blocks each comprising 8×8 pixels. A DCT block is a basic operation unit for DCT (discrete cosine transform). Different sampling rates are used for brightness data and color difference data. Six blocks are treated as a process unit, i.e., four blocks for the brightness data and one block for each of color difference data. The process unit is referred to as a macro block. The blocked image data is sent to the shuffling/deshuffling section 22.

The shuffling/deshuffling section 22 performs a shuffling process. The shuffling process interchanges data in units of five macro blocks so that the amount of data after compression can be averaged in the screen. This process unit is referred to as a video segment. The shuffled image data is sent to the DCT/IDCT section 23 and the movement detection section 24.

The DCT/IDCT section 23 performs two-dimensional discrete cosine transform (DCT) for the input image data to orthogonally transform it. The DCT/IDCT section 23 then sends the transformed image data to the quantization/inverse quantization section 25. At this time, the movement detection section 24 detects the amount of movement in the image data to determine whether to perform the DCT operation in the still mode or the video mode. In the still mode, the DCT/IDCT section 23 performs the (8×8) two-dimensional DCT operation for a DCT block of (8×8) pixels. In the video mode, however, the DCT/IDCT section 23 divides a DCT block of (8×8) pixels into first and second fields each comprising (4×8) pixels. Then, the DCT/IDCT section 23 performs the (4×8) two-dimensional DCT operation for each set of (4×8) pixels. By (4×8) pixels, it is meant that there are four pixels vertically and eight pixels horizontally. A moving image is separated into two blocks vertically for performing a DCT operation, making it possible to prevent vertical high-pass components from increasing and the compression efficiency from degrading.

A DCT operation equation includes the coefficient called the weighting factor. The weighting factor is weighted so that a higher frequency causes a smaller DCT coefficient horizontally and vertically. This is based on the fact that the human vision is less sensitive to a high-pass distortion. Accordingly, there are provided many high-pass DCT coefficients having a value of 0, improving the compression efficiency. A DCT operation result is sent to the quantization/inverse quantization section 25.

The quantization/inverse quantization section 25 divides the DCT coefficient by an integer value called a quantization step for performing quantization. Specifically, the quantization is performed by selecting a quantization table in which the number of bits after quantization becomes maximum within the number of target bits. The quantization table is assigned with predetermined steps so that a higher frequency causes coarser quantization horizontally and vertically. The quantization/inverse quantization section 25 categorizes respective video segments into four types of classes according to activities and selects a quantization table with different quantization steps for each class to perform quantization adaptively. Further, the quantization/inverse quantization section 25 zigzag scans the DCT coefficients quantized for each block from data of direct-current components toward high-pass components to form a one-dimensional data stream. The quantized data is sent to the variable length encoding/decoding section 26.

The variable length encoding/decoding section 26 performs the modified two-dimensional Huffman coding to encode the quantized data into a set of the run length with coefficient 0 and a succeeding value with coefficient non-zero. The variable length encoding can eliminate the amount of data for high-pass components containing many 0s. The variable-length encoded data is sent to the packing section 27.

The packing section 27 performs packing and shuffling processes. The packing process packs each input data in units of five sync blocks. A sync block indicates a small region which is one of divisions of a track on the magnetic tape 2. Namely, a recording area in a track on the magnetic tape 2 is divided into small regions called sync blocks. Image data is packed in units of sync blocks. In the DV system, one track includes 135 sync blocks. The shuffling process here interchanges image data packed in units of five sync blocks so that the data can be reproduced in the same possible sequence as the temporal sequence for the original image. The packing section 27 multiplexes the compressed image data with audio data or additional data and sends the data to the ECC section 28 on a track basis according to the DV system.

The ECC section 28 provides an error correction code to data supplied for each track according to the DV system. The ECC section 28 provides an inner parity and an outer parity to image data, audio data, and additional information independently. Data provided with the error correction code is sent to the modulation/demodulation section 29.

The modulation/demodulation section 29 applies channel coding to data to be recorded and converts a data string so as to comply with a digital recording/reproducing system.

During recording, as mentioned above, the DV data processing section 13 performs DCT operation and quantization for image data and outputs image-compressed DV data.

Then, the following describes processing of the DV data processing section 13 during reproduction.

During reproduction, the read/write section 14 reads DV data from the magnetic tape 2. The read DV data is supplied to the modulation/demodulation section 29.

The modulation/demodulation section 29 demodulates the input DV data and sends it to the ECC section 28. The ECC section 28 performs error correction based on error correction codes assigned to the image data, audio data, and the addition information. The error-corrected data is sent to the packing section 25.

The packing section 27 separates the image data, the audio data, and the additional information multiplexed for each track. The separated additional information is sent to a host controller, etc. The separated audio data is sent to an audio decoder, etc. The packing section 27 deshuffles (or inversely shuffles) and depacks (or inversely packs) the input image data and sends the data to the variable length encoding/decoding section 26.

The variable length encoding/decoding section 26 performs the two-dimensional Huffman decoding for the input image data to decode a variable length code. The decoded image data is sent to the quantization/inverse quantization section 25.

The quantization/inverse quantization section 25 references the quantization table used for encoding, inversely quantizes the input image data, and sends it to the DCT/IDCT section 23.

According to the DCT mode used for encoding, the DCT/IDCT section 23 performs IDCT operation for the input image data to expand the image, and sends the data to the shuffling/deshuffling section 22.

The shuffling/deshuffling section 22 deshuffles (or inversely shuffles) the input image data and sends it to the blocking section 21.

The blocking section 21 deblocks (or inversely blocks) the input image data and outputs the image data.

When the image data output from the blocking section 21 is video data, it is externally transmitted as a moving image. When the same image data is recording still image data, it is sent to the still image processing unit 12.

As mentioned above, the DV data processing section 13 can compress and expand image data using the DCT/IDCT operation and convert DV data formats.

The following describes image conversion by the still image processing unit 12 in the still mode.

First explained is the relationship between a still image (original still image) per frame output from the image pickup section 11 and a plurality of still images (recording still images) recorded on the magnetic tape 2.

First, the size of the recording still image is the same as that of the original still image and comprises $480 \times 720$ pixels, for example.

The number of recording still images is the same as the number of pixels $((8 \times 8) = 64)$ for a DCT block.

All data of $8 \times 8$ pixels in the DCT block for each recording still image corresponds to one pixel in the original still image. Namely, the recording still image uses the same value for all of $8 \times 8$ pixels in the DCT block. The value corresponds to any of pixels in the original still image data.

Each pixel data constituting the original still image is contained in at least one DCT block in the 64 recording still images. Namely, there are 5,400 $(60 \times 90)$ DCT blocks contained in one recording still image, in which case only the brightness is taken into consideration. There are provided 64 recording still images. Therefore, there are 345,600 DCT blocks available in total. By contrast, the original still image contains 345,600 $(480 \times 720)$ pixels. One-to-one correspondence is maintained between the number of pixels in the original still image and the number of DCT blocks in the recording still image. Accordingly, if it is assumed that all the same data is contained in the DCT block for the recording still image, the recording still image can contain all the pixel data constituting the original still image.

The still image processing unit 12 performs the image conversion between an original still image and a recording still image according a conversion rule satisfying the above-mentioned relationship.

The following represents an example of the conversion rule satisfying the above-mentioned relationship.

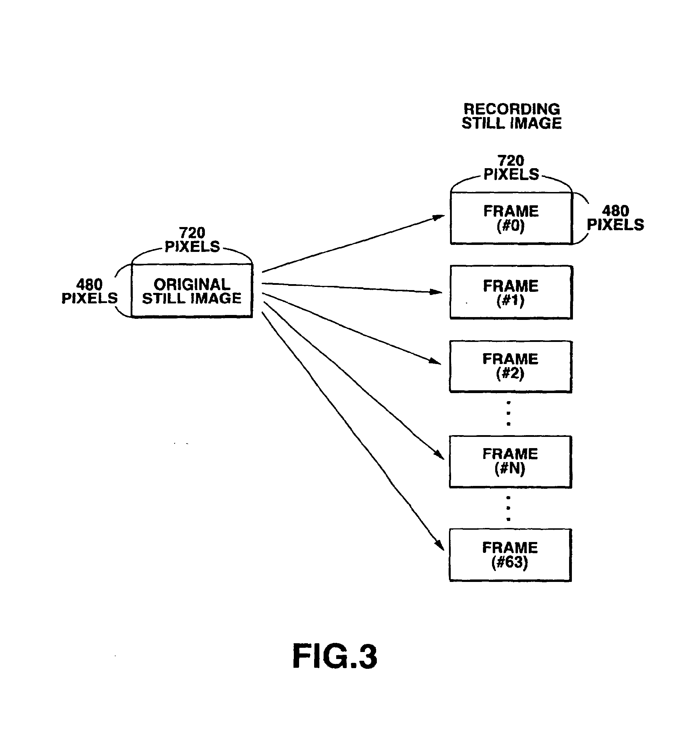

As shown in FIG. 3, there are generated 64 recording still images per frame of an original still image. Here, frame number N corresponds to a given recording still image, where an initial value of N is 0.

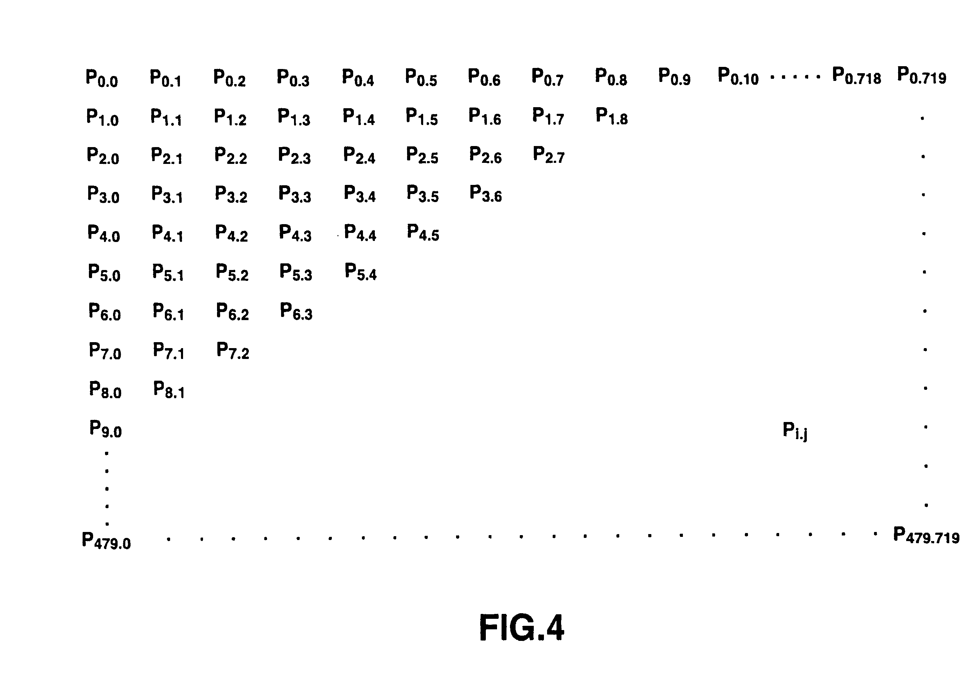

As shown in FIG. 4, the original still image comprises $480 \times 720$ pixels. A pixel at a given position is represented by $P_{i,j}$, where an initial value of i and j each is 0. For example, $P_{0,0}$ represents the value of the pixel at the top left position on the screen.

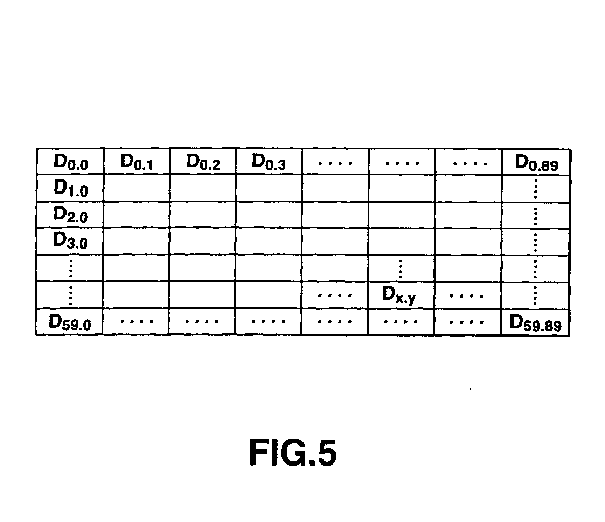

As shown in FIG. 5, each recording still image comprises $60 \times 90$ DCT blocks. Here, a macro block at a given position is represented by $D_{x,y}$. An initial value of x and y each is 0. For example, $D_{0,0}$ represents the DCT block at the top left position on the screen.

According to the above-mentioned definition, the still image processing unit 12 converts the original still image to the recording still image based on the following equations.

$$F(N,D_{x,y}) = P_{i,j}$$

$$i = (8 \times x)+(N \bmod 8)$$

$$j = (8 \times y)+(N \bmod 8)$$

where $F(N,D_{x,y})$ is a value for all pixels constituting the (x,y)th DCT block in the recording still image, and "mod" indicates a residue operation.

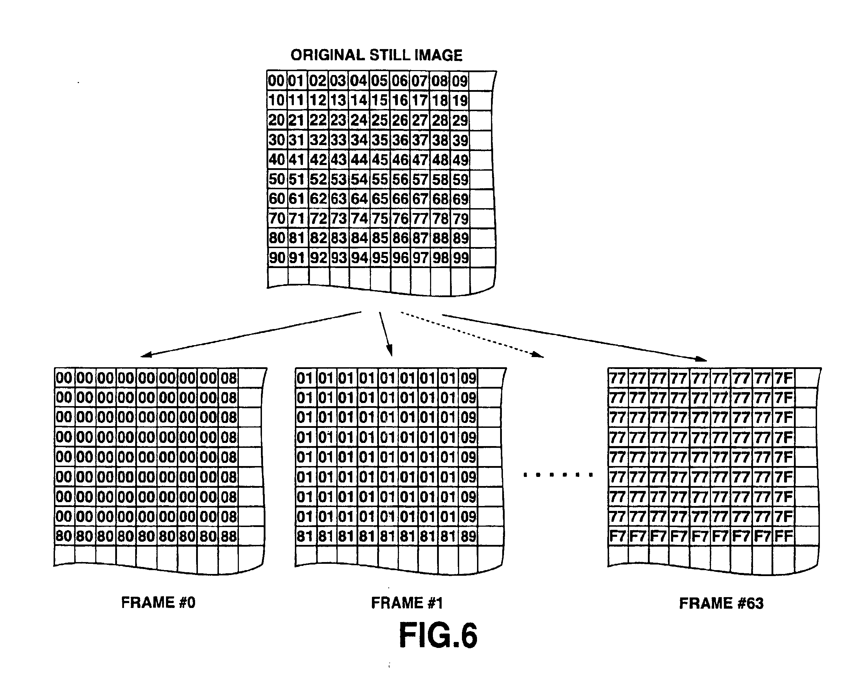

The image conversion configures each recording still image as shown in FIG. 6.

Namely, in the 0th frame of the recording still image, all pixels of the (0,0)th DCT block comprise P0,0 of the original still image. All pixels of the (0,1)th DCT block comprise P0,8 of the original still image. All pixels of the (1,0)th DCT block comprise P8,0 of the original still image.

In the first frame of the recording still image, all pixels of the (0,0)th DCT block comprise P0,1 of the original still image. All pixels of the (0,1)th DCT block comprise P0,9 of the original still image. All pixels of the (1,0) th DCT block comprise P9,0 of the original still image.

In the 63rd frame of the recording still image, all pixels of the (0,0)th DCT block comprise P7,7 of the original still image. All pixels of the (0,1)th DCT block comprise P7,15 of the original still image. All pixels of the (1,0)th DCT block comprise P15,7 of the original still image.

After the above-mentioned conversion, the DCT operation can be performed for each DCT block of the recording still image to produce frequency domain data. The resulting frequency domain data comprises only DC components. Therefore, no image information is missing even if the DCT operation and the quantization are performed. That is, since no AC components are available, performing the DCT operation and the quantization does not delete information.

Especially when the above-mentioned computing equations are used for image conversion, a single recording still image can be reproduced normally although it is rather mosaicked. Its content can be also confirmed.

As mentioned above, the video tape recorder 1 according to the embodiment of the present invention compresses a captured still image by using the DV data processing section 13 for compressing moving images. Nevertheless, the still image can be recorded and reproduced by maintaining the original still image's quality. Accordingly, it is possible to use the same recording-reproducing circuit for moving and still images and maintain the format compatibility. Further, still images can be recorded on a high-capacity recording medium for moving images, improving the recording efficiency.

While there has been explained the image conversion using 480 × 720 pixels per frame, the present invention is not limited thereto. While there has been explained the case where the recording still image has the same size as the original still image, the present invention is not limited thereto. The total number of DCT blocks for a plurality of recording still images may be greater than or equal to the number of pixels in the original still image. Further, the number of recording still images is not limited to 64.

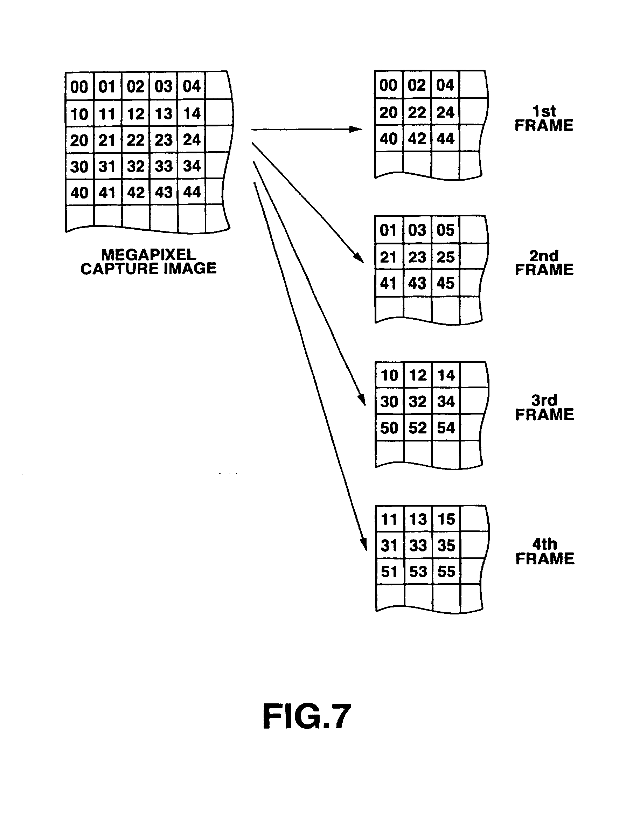

The number of pixels in a still image to be picked up is not limited to the number of pixels in a video frame. Any number of pixels may be available. For example, FIG. 7 shows how to record a megapixel capture still image having the number of pixels four times as many as that for one frame. The captured still image is incrementally sampled to be divided into four video frames. It may be preferable to generate a recording still image from each divided frame based on the above-mentioned computing equations.

While the video tape recorder 1 according to the embodiment of the present invention uses the still image processing unit 12, i.e., the same circuit for conversion during recording and reproduction, different circuits may be used. Here, the conversion during recording signifies conversion from an original still image to a recording still image. The conversion during reproduction means conversion from a recording still image to an original still image.

While there has been described the video tape recorder combined with camera using the DV system as the embodiment of the present invention, the present invention is not limited thereto. For example, the present invention can be also applied to a normal MPEG recording-reproducing apparatus or an apparatus to perform orthogonal transform operations other than DCT for image compression.

Industrial Applicability

On the image recording apparatus according to the present invention, an orthogonal transform operation block in a recording still image comprises only one given pixel in an original still image. The image recording apparatus generates a plurality of recording still images from the original still image according to a conversion system which allows all pixels constituting the original still image to be included in any orthogonal transform operation block in the recording still image. The image recording apparatus compresses the generated recording still images by using the orthogonal transform operation. Consequently, the image recording apparatus according to the present invention can reproduce high-quality still images despite the nonreversible compression using the orthogonal transform operation.

The image reproducing apparatus according to the present invention expands a plurality of recording still images reproduced from a recording medium by using the orthogonal transform operation. An orthogonal transform operation block in a recording still image comprises only one given pixel in an original still image. The image reproducing apparatus generates one original still image from the expanded recording still images according to a conversion system which allows all pixels constituting the original still image to be included in any orthogonal transform operation block in the recording still image. Consequently, the image reproducing apparatus according to the present invention can reproduce high-quality still images despite the nonreversible compression using the orthogonal transform operation.

On the image recording-reproducing apparatus according to the present invention, an orthogonal transform operation block in a recording still image comprises only one given pixel in an original still image. The image recording-reproducing apparatus generates a plurality of recording still images from the original still image according to a conversion system which allows all pixels constituting the original still image to be included in any orthogonal transform operation block in the recording still image. The image recording-reproducing apparatus orthogonally compresses the generated recording still images and records the compressed recording still images on a recording medium. Further, during reproduction, the image recording-reproducing apparatus reproduces the compressed recording still images from the recording medium, expands the reproduced compressed recording still images using an inverse orthogonal transform operation, and generates the original still image from the expanded recording still images according to the above-mentioned conversion system. Consequently, the image recording-reproducing apparatus according to the present invention can reproduce high-quality still images despite the nonreversible compression using the orthogonal transform operation.

## Claims

1. An image recording apparatus comprising:

conversion means for converting one original still image to a plurality of recording still images according to a specified conversion system; compression means for compressing image data by using an orthogonal transform operation; and recording means for recording image data compressed by said compression means on a recording medium, wherein said conversion means uses only one given pixel in an original still image to constitute an orthogonal transform operation block in a recording still image, and generates a plurality of recording still images from an original still image according to a conversion system which allows all pixels constituting the original still image to be included in any orthogonal transform operation block in the recording still image; and

said compression means compresses a plurality of recording still images generated by said conversion means.

2. The image recording apparatus according to claim 1, wherein said orthogonal transform operation is a discrete cosine transform operation.

3. An image reproducing apparatus comprising:

reproduction means for reproducing compressed image data from a recording medium; expansion means for expanding a compressed image data reproduced by said reproduction means by using an inverse orthogonal transform operation; conversion means for converting a plurality of recording still images to one original still image according to a specified conversion system, wherein said expansion means expands a plurality of recording still images reproduced from a recording medium; and said conversion means uses only one given pixel in an original still image to constitute an orthogonal transform operation block in a recording still image, and generates one original still image from a plurality of recording still images expanded by said expansion means according to a conversion system which allows all pixels constituting the original still image to be included in any orthogonal transform operation block in the recording still image.

4. The image reproducing apparatus according to claim 3, wherein said inverse orthogonal transform operation is an inverse discrete cosine transform operation.

5. An image recording-reproducing apparatus comprising:

recording-reproducing means for recording and reproducing compressed image data on a recording medium; image compression-expansion means for compressing and expanding image data by using an orthogonal transform operation and an inverse orthogonal transform operation; and conversion means for converting one original still image to a plurality of recording still images according to a specified conversion system and converting a plurality of recording still images to one original still image according to said specified conversion system, wherein when a still image is recorded, said conversion means uses only one given pixel in an original still image to constitute an orthogonal transform operation block in a recording still image, and generates a plurality of recording still images from an original still image according to a conversion system which allows all pixels constituting the original still image to be included in any orthogonal transform operation block in the recording still image; said image compression-expansion means compresses a plurality of recording still images generated by said conversion means;

said recording-reproducing means records a plurality of recording still images compressed by said compression means on a recording medium; and

when a still image is reproduced,

said recording-reproducing means reproduces a plurality of compressed recording still images from a recording medium;

said image compression-expansion means expands a plurality of compressed recording still images reproduced by said recording-reproducing means; and

said conversion means generates an original still image from a plurality of recording still images expanded by said image compression-expansion means according to said specified conversion system.

6. The image recording-reproducing apparatus according to claim 5, wherein said orthogonal transform operation is a discrete cosine transform, and said inverse orthogonal transform operation is an inverse discrete cosine transform.

7. An image recording method comprising:

using only one given pixel in an original still image to constitute an orthogonal transform operation block in a recording still image, and generating a plurality of recording still images from said single original still image according to a conversion system which allows all pixels constituting the original still image to be included in any orthogonal transform operation block in the recording still image;

compressing said plurality of recording still images by using an orthogonal transform operation in units of said orthogonal transform operation blocks; and

recording said plurality of compressed recording still images on a recording medium.

8. The image recording method according to claim 7, wherein said orthogonal transform operation is a discrete cosine transform operation.

9. An image reproducing method comprising:

reproducing a plurality of recording still images from a recording medium;

expanding a plurality of reproduced image-recording still images by using an inverse orthogonal transform operation in units of orthogonal transform operation blocks;

using only one given pixel in an original still image to constitute an orthogonal transform operation block in a recording still image, and generating one original still image from said plurality of expanded recording still images according to a conversion system which allows all pixels constituting the original still image to be included in any orthogonal transform operation block in the recording still image; and

outputting one generated original still image.

10. The image reproducing method according to claim 9, wherein said inverse orthogonal transform operation is an inverse discrete cosine transform operation.

11. An image recording-reproducing method comprising:

during recording,

inputting one original still image;

using only one given pixel in an original still image to constitute an orthogonal transform operation block in a recording still image, and generating a plurality of recording still images from said single original still image according to a conversion system which allows all pixels constituting the original still image to be included in any orthogonal transform operation block in the recording still image;

compressing said plurality of recording still images by using an orthogonal transform operation in units of said orthogonal transform operation blocks;

recording said plurality of compressed recording still images on a recording medium; and

during reproduction,

reproducing a plurality of recording still images from a recording medium;

expanding a plurality of reproduced image-recording still images by using an inverse orthogonal transform operation in units of orthogonal transform operation blocks;

using only one given pixel in an original still image to constitute an orthogonal transform operation block in a recording still image, and generating one original still image from said plurality of expanded recording still images according to a conversion system which allows all pixels constituting the original still image to be included in any orthogonal transform operation block in the recording still image; and

outputting one generated original still image.

12. The image recording-reproducing method according to claim 11, wherein said orthogonal transform operation is a discrete cosine transform, and said inverse orthogonal transform operation is an inverse discrete cosine transform.

EP 1 341 381 A1

**STILL IMAGE PROCESSING UNIT** *12*

**MEMORY** *16*

**MEMORY CONTROLLER** *15*

**IMAGE PICKUP SECTION** *11*

**DV DATA PROCESSING SECTION** *13*

**READ/WRITE SECTION** *14*

*1*

*2*

STILL IMAGE OUTPUT

MOVING IMAGE OUTPUT

# FIG.1

EP 1 341 381 A1

**FIG.2**

**FIG.3**

EP 1 341 381 A1

$P_{0.0}$  $P_{0.1}$  $P_{0.2}$  $P_{0.3}$  $P_{0.4}$  $P_{0.5}$  $P_{0.6}$  $P_{0.7}$  $P_{0.8}$  $P_{0.9}$  $P_{0.10}$ $\cdots$ $P_{0.718}$ $P_{0.719}$

$P_{1.0}$  $P_{1.1}$  $P_{1.2}$  $P_{1.3}$  $P_{1.4}$  $P_{1.5}$  $P_{1.6}$  $P_{1.7}$  $P_{1.8}$

$P_{2.0}$  $P_{2.1}$  $P_{2.2}$  $P_{2.3}$  $P_{2.4}$  $P_{2.5}$  $P_{2.6}$  $P_{2.7}$

$P_{3.0}$  $P_{3.1}$  $P_{3.2}$  $P_{3.3}$  $P_{3.4}$  $P_{3.5}$  $P_{3.6}$

$P_{4.0}$  $P_{4.1}$  $P_{4.2}$  $P_{4.3}$  $P_{4.4}$  $P_{4.5}$

$P_{5.0}$  $P_{5.1}$  $P_{5.2}$  $P_{5.3}$  $P_{5.4}$

$P_{6.0}$  $P_{6.1}$  $P_{6.2}$  $P_{6.3}$

$P_{7.0}$  $P_{7.1}$  $P_{7.2}$

$P_{8.0}$  $P_{8.1}$

$P_{9.0}$                                                                   $P_{i.j}$

$P_{479.0}$ $\cdot$ $\cdot$ $\cdot$ $\cdot$ $\cdot$ $\cdot$ $\cdot$ $\cdot$ $\cdot$ $\cdot$ $\cdot$ $\cdot$ $\cdot$ $\cdot$ $\cdot$ $P_{479.719}$

**FIG.4**

| $D_{0.0}$ | $D_{0.1}$ | $D_{0.2}$ | $D_{0.3}$ | . . . . | . . . . | . . . . | $D_{0.89}$ |
|---|---|---|---|---|---|---|---|
| $D_{1.0}$ | | | | | | | ⋮ |
| $D_{2.0}$ | | | | | | | ⋮ |
| $D_{3.0}$ | | | | | | | ⋮ |
| ⋮ | | | | | ⋮ | | ⋮ |
| ⋮ | | | | . . . . | $D_{x.y}$ | . . . . | ⋮ |
| $D_{59.0}$ | . . . . | . . . . | . . . . | . . . . | . . . . | . . . . | $D_{59.89}$ |

# FIG.5

**ORIGINAL STILL IMAGE**

| 00 | 01 | 02 | 03 | 04 | 05 | 06 | 07 | 08 | 09 |
|----|----|----|----|----|----|----|----|----|----|
| 10 | 11 | 12 | 13 | 14 | 15 | 16 | 17 | 18 | 19 |
| 20 | 21 | 22 | 23 | 24 | 25 | 26 | 27 | 28 | 29 |
| 30 | 31 | 32 | 33 | 34 | 35 | 36 | 37 | 38 | 39 |
| 40 | 41 | 42 | 43 | 44 | 45 | 46 | 47 | 48 | 49 |
| 50 | 51 | 52 | 53 | 54 | 55 | 56 | 57 | 58 | 59 |
| 60 | 61 | 62 | 63 | 64 | 65 | 66 | 67 | 68 | 69 |
| 70 | 71 | 72 | 73 | 74 | 75 | 76 | 77 | 78 | 79 |
| 80 | 81 | 82 | 83 | 84 | 85 | 86 | 87 | 88 | 89 |
| 90 | 91 | 92 | 93 | 94 | 95 | 96 | 97 | 98 | 99 |

| 00 | 00 | 00 | 00 | 00 | 00 | 00 | 00 | 08 |
|----|----|----|----|----|----|----|----|----|
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 00 | 00 | 00 | 00 | 00 | 00 | 00 | 00 | 08 |
| 80 | 80 | 80 | 80 | 80 | 80 | 80 | 80 | 88 |

**FRAME #0**

| 01 | 01 | 01 | 01 | 01 | 01 | 01 | 01 | 09 |
|----|----|----|----|----|----|----|----|----|
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 01 | 01 | 01 | 01 | 01 | 01 | 01 | 01 | 09 |
| 81 | 81 | 81 | 81 | 81 | 81 | 81 | 81 | 89 |

**FRAME #1**

· · · · · ·

| 77 | 77 | 77 | 77 | 77 | 77 | 77 | 77 | 7F |
|----|----|----|----|----|----|----|----|----|
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| 77 | 77 | 77 | 77 | 77 | 77 | 77 | 77 | 7F |
| F7 | F7 | F7 | F7 | F7 | F7 | F7 | F7 | FF |

**FRAME #63**

## FIG.6

**FIG.7**

## INTERNATIONAL SEARCH REPORT

| International application No. |
| --- |
| PCT/JP01/10102 |

A. CLASSIFICATION OF SUBJECT MATTER
Int.Cl⁷ H04N 5/92

According to International Patent Classification (IPC) or to both national classification and IPC

B. FIELDS SEARCHED

Minimum documentation searched (classification system followed by classification symbols)
Int.Cl⁷ H04N 5/76-5/956

Documentation searched other than minimum documentation to the extent that such documents are included in the fields searched
Jitsuyo Shinan Koho        1922-1996    Toroku Jitsuyo Shinan Koho  1994-2002
Kokai Jitsuyo Shinan Koho  1971-2002    Jitsuyo Shinan Toroku Koho  1996-2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-115694 A (Sony Corporation), 21 April, 2000 (21.04.2000), Full text; Figs. 1 to 19 & EP 0993190 A2 | 1-12 |
| A | JP 10-023371 A (Victor Company of Japan, Limited), 23 January, 1998 (23.01.1998), Full text; Figs. 1 to 12 & EP 0822724 A2 | 1-12 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 February, 2002 (06.02.02) | 19 February, 2002 (19.02.02) |

| Name and mailing address of the ISA/ | Authorized officer |
| --- | --- |
| Japanese Patent Office | |
| Facsimile No. | Telephone No. |

Form PCT/ISA/210 (second sheet) (July 1992)